# EUROPEAN PATENT SPECIFICATION

(11) **EP 2 741 387 B1**
(45) Date of publication and mention of the grant of the patent: **09.03.2016**
(21) Application number: 13196144.3
(22) Date of filing: 09.12.2013
(51) Int. Cl.: H02H 3/04, H02H 3/093, H02J 3/04, H02H 1/00

(54) **An electronic fuse and use thereof**
Eine elektronische Sicherung und ihre Anwendung
Une fusible électronique et Sa UTILISATION

(30) Priority: 07.12.2012 NL 2009941
(43) Date of publication of application: 11.06.2014
(73) Proprietor: Muco Technologies B.V., 1046 AG Amsterdam (NL)
(72) Inventor: Leipoldt, Peter, 1046 AG Amsterdam (NL)
(74) Representative: Plaggenborg, Menko Bernard

(56) References cited:
- EP-A1- 0 534 868
- DE-A1- 19 722 898

## Description

The present invention relates to an electronic fuse for a low voltage conduit (in particular for 400 V conduits) according to the preamble of claim 1. According to a preferred embodiment the invention relates to the use of such an electronic fuse.

For example, an electronic switch is described in EP 1523080, a condition of which can be read remotely. So as to be able to distinguish between the states of several switches, a code is added to the feed signal of the electronic circuits of each switch.

A disadvantage of this known switch consists of the fact that a separate signal has to be added to the feed so as to be able to read the state of said switch. This adds to the complexity of the lay-out of the electronic switch which may lead to failure of functions.

Furthermore, from German patent application DE 197 22 898 an electronic switch is known that provides a direct switching in a conduit that forms part of a computer network or the like. Due to the fact that it applies a specific low value of applied voltage (12 V) use of this known lay-out is not possible in low voltage conduits according to the present invention, applying currents of several hundred amperes, for example up to a maximum of 400 A nominally at 400 V.

Finally, the Kelvatek company offers the so-called Rezap Faultmaster, allowing one to remotely determine a fault location in a feed supply. This Faultmaster monitors the switching off of a feed supply line so as to be able to determine the fault location on the basis of data obtained by said monitoring.

The present invention now aims at providing an improved electronic fuse of the kind mentioned in the preamble.

The present invention especially aims at providing a fuse of the kind mentioned in the preamble that does not need the addition of a separate coded signal to a feed supply for being able to read the state of said fuse.

The invention also aims at providing an improved fuse of the kind mentioned in the preamble, which can be read independent of the position of the user.

So as to obtain at least one of the goals mentioned above, according to a first embodiment the present invention provides an electronic fuse for an electric low voltage power conduit (L1, L2, L3), comprising: - a current sensor coupled to the power conduit for measuring an electric current through said power conduit (L1, L2, L3) during use of said power conduit (L1, L2, L3), - a switch (in particular a vacuum tube) in said power conduit (L1, L2, L3) being connected to a switching module, for switching said switch between a interrupted and a conductive state; wherein said switching module is connected to said current sensor and comprises a switching circuit for performing a switching operation of said switch on the basis of said electric current measured by said current sensor; and wherein said switching module is connected to a wireless transmitting and receiving device for wirelessly transmitting data regarding the position of said switch, wherein said electronic fuse comprises a memory with a library of switching behavior of at least one fuse, comprising the switching off moment of said fuse, and a comparison unit for comparing use data of said power conduit (L1, L2, L3) with a turn off moment of the at least one fuse, for turning off the electronic fuse through said switching module when use data of the power conduit (L1, L2, L3) correspond to turning off of the fuse.

Such electronic fuse is known from DE 197 22 898 A2, mentioned above. This known electronic fuse provides a direct switching in a low-voltage (12 V) conduit.

It may be advantageous to not directly switch off a fuse. So as to be able to obtain a delay in the switching off moment of the electronic fuse, same is characterized in that said memory comprises a library of switching behavior (especially a delay) of at least one mechanical fuse, comprising the switching off moment of said mechanical fuse, wherein said comparison unit compares use data of said power conduit (L1, L2, L3) with a turn off moment of the at least one mechanical fuse, and wherein the turning off moment of the electronic fuse is intended to be a delay from the moment an excessive current is detected to the moment the electronic fuse opens. This fuse has the advantage that the behaviour of a mechanical fuse is obtained. Furthermore, the present electronic fuse provides the advantage that reading said switch can be performed easily, without a coded signal having to be added to the feed line. Reading may now be performed directly. Furthermore, the invention has the advantage that reading may be performed from any location. Especially when the fuse is positioned at a remote location this is a huge advantage. Due to the small number of electronic components, the chance of failure with respect to fuses available in the state of the art will be smaller, which is a huge advantage both in efficiency and costs.

The invention is especially directed to the use of a fuse in a feed line having a nominal voltage of 400V and a nominal current of 400A.

It is especially preferred for the switching module to comprise a manual or remotely operable (for example a handheld remote control) switch, for making the device switch. When performing maintenance on the switching station that comprises the present fuse, an immediate switching off of the feed lines can be obtained. After finishing maintenance, the electronic fuse may be switched on again manually.

Furthermore, it is preferred for the electronic fuse to comprise a power unit for electrically feeding the switching module, wherein the power unit is connected electrically to the electric feed line. This way, the electricity provided by the electric feed line can be easily used for controlling and monitoring the position of the switch. In case of a loss of power, in case failure of the electric feed line, it is preferred that the switch can still be operated. For that reason, it is preferred that the electronic fuse comprises a battery that is fed by the electric feed line, as well as a control circuit for switching on the battery upon failure of the electric feed line.

As will be known, electronic fuses, both fuses that are used in low voltage conduits (up to 1000 V) as well as fuses that are used in medium and low voltage conduits (up to about 10000 V), may only be able to withstand a limited number of switches, until a maximally safe life span is obtained. For that reason, it is preferred that the electronic fuse, for example the switch unit, comprises a counter for monitoring the number of switching actions of said switch that have occurred due to a too high current in the feed line that is monitored. More in particular, the energy that was released during closing or opening the switch is a decisive factor on the life span of the switch. Thus, the electronic fuse may comprise a table containing on the one hand the number of switches (by means of the counter) and on the other hand the moment of switching off. By consulting the table, a moment of switching of the electronic fuse may be chosen for switching off the switch on the feed line that is monitored.

Also, the current through the feed line at the moment the switch is turned off is of importance for determining the number of switching operations allowed. Preferably, the table also comprises information regarding the current at the moment of operating the switch and the corresponding number of switching operations that is allowed.

The table preferably also comprises information regarding a maximum current through the feed line that is higher than the nominal current and the time frame during which the fuse is not turned off, such data preferably corresponding to a standard mechanical switch. This way, the electronic fuse according to the present invention will behave as a standard mechanical switch.

For example, the table may comprise data such that the switch will remain switched on as long as the current has a value of 400 A (a nominal current for the fuse presented hereinbefore as an example); that it will be switched off after 5 hours at a current of 450 A; that it will be switched off after three hours at a current of 500 A; and that it will be switched off within a few seconds at a current of 1000 A. Such behaviour, only presented as an example, is analogous to a mechanical fuse's behaviour.

The electronic fuse further comprises a counter for monitoring the number of switching operations of the switch (also identified by the terms switching, switching actions, closing, opening, turning off, turning on and the like). Especially when a failure occurs in the feed line (also identified as power line or power conduit), activating the switch multiple times may incur a failure elsewhere in the feed line. As a consequence, the counter aims at limiting the maximum number of activating the switch. To that end, a safety measure may be provided in the fuse that disables the possibility of manually activating the switch. This safety measure may consist of said counter.

As a consequence, the invention also relates to an electronic fuse that comprises at least a counter for registering at least one of: - the number of manually induced switching operations, and - the number of switching operations that are induced due to a measured current in the feed line; taking into account the energy released during said switching operation, for comparison with a behaviour of a mechanical fuse and, based on said comparison, switching off said switch.

So as to be able to obtain a correct indication of the switch's present position it is preferred for the electronic fuse to be embodied for registering a switch's present position. According to a further preferred embodiment the electronic fuse may comprise a memory module for recording the number of switching operations of said switch, preferably in combination with an indication of the time of each switching operation.

So as to be able to provide an appropriate data transfer between the electronic fuse and a user, the switching device preferably comprises at least two wireless transmitting and receiving devices, preferably each according to another protocol. For example, the wireless transmitting and receiving device may be embodied for data transfer according to at least one of gprs, wifi, Zigbee, IQRF, SimpleIT, Beestack, Z-wave, KNX, EnOcean, bluetooth or the like.

In case the switching module needs to be programmed or otherwise needs to be provided with data, preferably data relating to the behaviour of a standardized mechanical fuse, the switching device preferably comprises a means for entering data to the switching device. It is especially preferred for the programmable electronic switch to be embodied as an electronic fuse, wherein a delay mechanism is programmed. A delay is generally known in the art of mechanical fuses. A switch will, in case a current is detected (also identified as measured) in a feed line that is higher than a predetermined value, turn off the feed line. A fuse acts such that the feed line is not turned off at a slight exceedance of said predetermined value. Such will obtained only after a longer lasting exceedance, said turning off will be obtained earlier at a strong exceedance than at a slight exceedance. The electronic fuse according to the present invention comprises a programmable switching module with a delay, such that a slight, short exceedance of the predetermined value does not yield a switching off, but a longer lasting exceedance does. A strong exceedance will sooner yield a switching off than a slight exceedance. These data regarding the degree of exceedance and duration of exceedance, as known from mechanical fuses, are preferably contained in the table according to which the electronic fuse makes the switch operate.

So as to enable communication between the switching device and a user that enters data into the switching device, the switching device preferably comprises a means for displaying data generated by said electronic fuse.

So as to be able to simultaneously switch on or switch off all electric feed lines by means of the switch, the electronic fuse preferably is embodied for switching an electric feed line comprising at least two wires (also identified as power lines or power conduits), said electronic fuse comprising at least one of [a] a switch being embodied for switching all power conduits simultaneously or [b] a switch being embodied for optionally switching one or a plurality of electric power conduits.

A modular system may be obtained when the electronic fuse comprises a control module which is connected to a switching module and a wireless transmitting and receiving device, for providing communication between the wireless transmitting and receiving device and the switching module.

In this respect, it is preferred for the control module to be connected with the power unit for powering the electronic fuse.

The electronic fuse may advantageously be provided with the features as mentioned above and hereafter and that have been identified with respect to the electronic fuse. The present invention especially relates to an electronic fuse, comprising a programmable module for providing a switching delay when measuring an electronic current that exceeds a predetermined value in the electric power conduit.

The invention also relates to the use of an electronic fuse according to the invention described above, comprising the step of incorporating an electronic fuse in a power conduit, and manually switching on said fuse, taking into account a programmed delay, after said fuse has been switched off due to exceeding a predetermined current in the power conduit. This enables a user to manually switching on said electronic fuse after same has been switched off due to a predetermined current. It is especially preferred for the fuse to be switchable remotely, which enables one to switch on said electronic fuse remotely without requiring someone to be present physically, after clearing a malfunction that has led to said increased current.

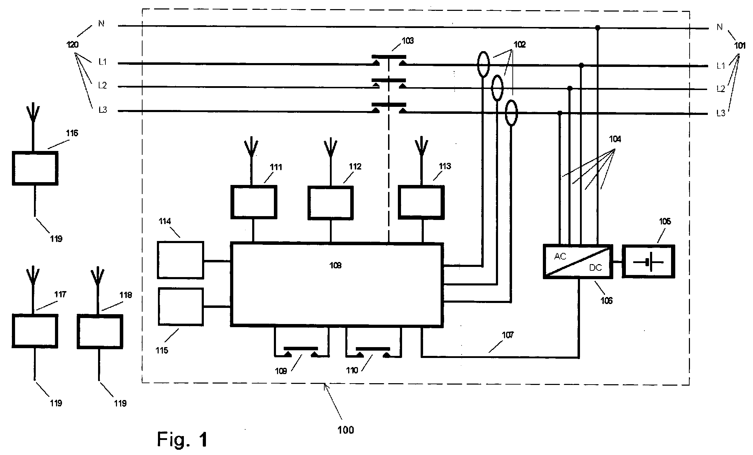

Hereafter, the invention will be explained by means of a drawing. The drawing shows in Fig. 1 a switching circuit of an electronic fuse according to the invention.

Not all features that are required or a practical embodiment have been shown in the drawing, for ease of understanding the figure.

Within the interrupted lines, Fig. 1 shows a schematic circuit of an electronic fuse 100 according to the present invention. Fuse 100, depicted as a switching device 100 and hereafter identified as switching device, comprises current sensors 102 that are coupled electrically to electric power conduits, identified as N, L1, L2, L3, comprising an entrance 101 and an exit 120. In the embodiment shown in Fig. 1 three phases (L1, L2, L3) and a neutral wire (N) are shown. However, electronic fuse 100 can be used for all other embodiments, for example a two phase circuit or a single phase circuit with a neutral wire. For example, the power conduits may be low voltage wires.

Electronic fuse 100 comprises a control circuit that is connected with sensors 102 for measuring (i.e. controlling) a current through power conduits, hereinafter identified as L1, L2, L3. At a predetermined maximum current, electronic fuse 100 will actuate switches 103 so as to switch of power conduits L1, L2, L3. Maximum current may for example be a safe limit for the respective power conduits.

The electronic fuse 100 comprises a switching module that is connected to switch 103 and that is embodied for actuating switch 103. A layout of the control circuit for actuating switch 103 at a predetermined measured current through said power conduits is known to a skilled man.

In case there is need for manually operating switch 103, manual switches 109, 110 may be provided, for example embodied as push buttons or tumblers, that may have switch 103 toggle between a conductive and interrupted position.

The electronic fuse 100 as shown within the interrupted line of Fig. 1, comprises a control module 108. Control module 108 may for example contain integrated therein said switching module for actuating switch 103. Optionally, control module 108 may be regarded the switching module, in which case said switching module comprises integrated therein the control circuit for actuating switch 103.

Hereafter, reference will be made to a control module 108 that is embodied for actuating the switch and that comprises the control circuit for evaluating the current through the power conduits.

The electronic fuse 100 is, through power conduit 107, connected to a power supply that comprises an AC/DC converter 106 that is powered by power conduits L1, L2, L3. Said power supply should be designed such that electronic fuse 100 is enabled to perform all required operations. To that end, converter 106 is connected to power conduits L1, L2, L3 through power lines 104. Same is connected to a battery 105 as well. Said battery is kept in a charged state and serves as a power supply for control module 108 in case power on power conduits is interrupted, for example because switch 103 is in interrupted position or because of a power failure somewhere else. Said battery should have sufficient capacity for controlling said control module, for example switch 103, and for sending a message through wireless transmitting and receiving device 111, 112, 113 (da further elucidation thereof will be given hereafter) about electronic fuse's 100 present state.

Control circuit of control module 108 may preferably be programmable. To that end, a data input device 115 may be provided, for example a keyboard. So as to provide interaction with said control module a monitor 114 or the like may be provided.

For example, said control module 108 may be programmable by means of software. To that end, the control module 108 may be provided with a delay effect, analogous to a time-current diagram like a safety fuse of a regular (mechanical) fuse. Such delay provides the character of a fuse in that a slight exceeding of the maximum load not immediately leads to a shutdown of said switch 103. Every delay curve (as is common practice in regular safety fuses or mechanical fuse) may be programed into the present electronic fuse. As a consequence, the present fuse may simply be used as an electronic fuse that can be switched on and off remotely.

The control module may comprise wireless transmitting and receiving devices 111, 112, 113 so as to enable remote interaction with control module 108. For example, each transmitting and receiving device may be embodied for a specific protocol, for example at least one of gprs, wifi, Zigbee, IQRF, SimpleIT, Beestack, Z-wave, KNX, EnOcean and bluetooth or any other wireless protocol.

A user may interact with said electronic fuse 100 by using one's own control device that may be provided with a transmitting and receiving device 116, 117, 118. Communication from substantially any position will be possible.

Especially turning the switch 103 on and off may endanger a user, in particular when the power conduits are low voltage conduits. Furthermore, switch 103 has a limited life time, which means that it can only handle a limited number of switching operations.

The control module preferably comprises a counter that stores the number of switching operations of switch 103 in a memory. By means of the wireless transmitting and receiving device the memory may be read out. According to a preferred embodiment, the electronic fuse 100 independently transmits a message to a base station (not shown), for example coupled to a transmitting and receiving device 116, 117, 118 after a maximum amount of switching operations has been performed, such that electronic fuse 100 can be replaced.

In practice, the life time of switch 103 may be limited by the number of switching operations of switch 103 so as to activate same and by the current intensity being transferred through power conduits L1, L2, L3. At a modest current intensity of a dead power conduit, the maximum number of switching operations of switch 103 will be more than at a high current intensity. As a consequence, it is preferred that the counter that stores the number of manual switching operations, can be resettable or that the maximum number of safe operations can be increased. Such is especially advisable if the current intensity during a switching operation is low or zero and the lifetime of switch 103 is not or not substantially influenced. Such a reset operation or modification of such preset value can be programmed wirelessly or through a data input device 115. A man skilled in the art will be capable of providing an electronic fuse with such programmable module so as to enable the fuse to act with a switching delay as mentioned before.

The invention is not limited to the embodiment describes above and as shown in the figure. Switch 103 may be embodied as a relay, such embodiment being covered by the present description and claims. The invention is limited by the claims only.

The invention also embodies every combination of measures and features that have been described hereinbefore independently of each other. The electronic fuse electronic fuse may be provided advantageously with the features and measures described independently with respect to the electronic switch.

## Claims

1. An electronic fuse (100) for an electric low voltage power conduit (L1, L2, L3), comprising:
- a current sensor (102) coupled to the power conduit for measuring an electric current through said power conduit (L1, L2, L3) during use of said power conduit (L1, L2, L3),
- a switch (103) in said power conduit (L1, L2, L3) being connected to a switching module, for switching said switch between a interrupted and a conductive state;
wherein said switching module is connected to said current sensor (102) and comprises a switching circuit for performing a switching operation of said switch (103) on the basis of said electric current measured by said current sensor (102); and
wherein said switching module is connected to a wireless transmitting and receiving device (111, 112, 113) for wirelessly transmitting data regarding the position of said switch,
wherein said electronic fuse (100) comprises a memory with a library of switching behavior of at least one fuse, comprising the switching off moment of said fuse, and a comparison unit for comparing use data of said power conduit (L1, L2, L3) with a turn off moment of the at least one fuse, for turning off the electronic fuse (100) through said switching module when use data of the power conduit (L1, L2, L3) correspond to turning off of the fuse, **characterized in that** said memory comprises a library of switching behavior of at least one mechanical fuse, comprising the switching off moment of said mechanical fuse, wherein said comparison unit compares use data of said power conduit (L1, L2, L3) with a turn off moment of the at least one mechanical fuse, and wherein the turning off moment of the electronic fuse (100) is intended to be a delay from the moment an excessive current is detected to the moment the electronic fuse (100) opens.

2. Electronic fuse (100) according to claim 1, said switching module comprising a manually operable switch (109, 110) for performing a switching operation of said switch (103).

3. Electronic fuse (100) according to claim 1 or 2, comprising a power unit for electrically powering said switching module (103), wherein said power unit is connected electrically to said electrical power conduit (L1, L2, L3).

4. Electronic fuse (100) according to claim 1, 2 or 3, said electronic fuse (100) comprising an optional battery (105) to be charged by said electrical power conduit (L1, L2, L3), further comprising a control circuit for switching on said battery (105) in case of a failure of said electrical power conduit (L1, L2, L3) .

5. Electronic fuse (100) according to any of the preceding claims, at least comprising at least a counter for registering at least one of:
- the number of manually induced switching operations of said switch (103), and
- the number of switching operations that are induced due to a measured current in the feed line (L1, L2, L3);
taking into account the energy released during said switching operation, for comparison with a behaviour of a mechanical fuse and, based on said comparison, switching off said switch (103).

6. Electronic fuse (100) according to any of the preceding claims, the electronic fuse (100) also being embodied for registering a present position of said switch (103).

7. Electronic fuse (100) according to any of the preceding claims, said wireless transmitting and receiving device (111, 112, 113; 116, 117, 118) being embodied for data transfer on the basis of at least one of gprs, wifi, Zigbee, IQRF, SimpleIT, Beestack, Z-wave, KNX, EnOcean, Bluetooth or the like.

8. Electronic fuse (100) according to any of the preceding claims, further comprising a means (115) for inputting data into said switching device (103).

9. Electronic fuse (100) according to any of the preceding claims, said switching circuit being embodied for programming for controlling the moment of performing a switching operation with respect to an electric current measured by said current sensor (102).

10. Electronic fuse (100) according to any of the preceding claims, further comprising a means (114) for imaging data obtained from said electronic fuse (100).

11. Electronic fuse (100) according to any of the preceding claims, for switching an electrical power conduit (L1, L2, L3) comprising at least two power conduits, comprising at least one of [a] a switch (103) being embodied for switching all power conduits (L1; L2; L3) simultaneously or [b] a switch (103) being embodied for optionally switching one or a plurality of electric power conduits (L1; L2; L3).

12. Electronic fuse (100) according to any of the preceding claims, comprising a control module (108) which is connected to a switching module (103) and a wireless transmitting and receiving device (111, 112, 113), for providing communication between the wireless transmitting and receiving device and the switching module (103).

13. Electronic fuse (100) according to claim 12, wherein the control module (108) is connected with the power unit (105) for powering the electronic fuse (100).

14. Electronic fuse (100) according to any of claims 1-13, comprising a programmable module (108) for providing a switching delay in turning off said electronic fuse (100) when measuring an electronic current that exceeds a predetermined value in the electric power conduit (L1, L2, L3).

15. Use of an electronic fuse (100) according to any of the preceding claims, comprising the step of incorporating an electronic fuse (100) in a power conduit (L1, L2, L3), and manually switching on said fuse (100), taking into account a programmed delay, after said fuse (100) has been switched off due to exceeding a predetermined current in the power conduit (L1, L2, L3).

## Patentansprüche

1. Elektrische Sicherung (100) für eine elektrische Niederspannungs-Stromleitung (L1, L2, L3), welche umfasst:
- einen Stromsensor (102), der mit der Stromleitung gekoppelt ist, um während der Nutzung der Stromleitung (L1, L2, L3) einen elektrischen Stromfluss durch die Stromleitung (L1, L2, L3) zu erfassen,
- einen Schalter (103) in der Stromleitung (L1, L2, L3), der mit einem Schaltmodul verbunden ist, um den Schalter zwischen einem unterbrochenen und einem leitenden Zustand zu schalten,
worin das Schaltmodul mit dem Stromsensor (102) verbunden ist und einen Schalt-Schaltkreis umfasst, um einen Schaltbetrieb des Schalters (103) auf Basis des durch den Stromsensor (102) erfassten elektrischen Stroms durchzuführen, und
worin das Schaltmodul mit einer drahtlosen Übertragungs- und Empfangs-Einrichtung (111, 112, 113) verbunden ist, um drahtlos Daten hinsichtlich der Position des Schalters zu übertragen,
worin die elektrische Sicherung (100) einen Speicher mit einer Bibliothek des Schaltverhaltens mindestens einer Sicherung umfasst, welche den Abschaltmoment der Sicherung umfasst, und eine Vergleichseinheit zum Vergleichen der Verwendungsdaten der Stromleitung (L1, L2, L3) mit einem Abschaltmoment der mindestens einen Sicherung, um die elektrische Sicherung (100) durch das Schaltmodul abzuschalten, wenn Verwendungsdaten der Stromleitung (L1, L2, L3) der Abschaltung der Sicherung entsprechen,
**dadurch gekennzeichnet, dass** der Speicher eine Bibliothek des Schaltverhaltens mindestens einen mechanischen Sicherung umfasst, die das Abschaltmoment der mechanischen Sicherung umfasst, worin die Vergleichseinheit Verwendungsdaten der Stromleitung (L1, L2, L3) mit einem Abschaltmoment der mindestens einen mechanischen Sicherung vergleicht, und worin das Abschaltmoment der elektrischen Sicherung (100) dazu gedacht ist, eine Verzögerung von dem Moment, in dem ein übermäßiger Stromfluss erfasst wird, bis zu dem Moment, in dem sich die elektrische Sicherung öffnet, darzustellen.

2. Elektrische Sicherung (100) nach Anspruch 1, worin das Schaltmodul einen manuell betätigbaren Schalter (109, 110) zur Durchführung eines Schaltbetriebs des Schalters (103) umfasst.

3. Elektrische Sicherung (100) nach Anspruch 1 oder 2, welche eine Stromversorgungseinheit zur elektrischen Stromversorgung des Schaltmoduls (103) umfasst, worin die Strom-versorgungseinheit mit der elektrischen Stromleitung (L1, L2, L3) elektrisch verbunden ist.

4. Elektrische Sicherung (100) nach Anspruch 1, 2 oder 3, worin die elektrische Sicherung (100) wahlweise eine Batterie umfasst, die über die elektrische Stromleitung (L1, L2, L3) geladen wird, und weiter einen Steuerschaltkreis umfasst, um im Falle eines Fehlers der elektrischen Stromversorgung (L1, L2, L3) auf die Batterie (105) umzuschalten.

5. Elektrische Sicherung (100) nach einem der vorstehenden Ansprüche, welche mindestens einen Zähler umfasst zur Registrierung mindestens eines von:
- der Anzahl manuell induzierter Schaltbetriebe des Schalters (103), und
- der Anzahl von Schaltbetrieben, die aufgrund eines erfassten Stroms in der Zufuhr- Leitung (L1, L2, L3) induziert werden;
wobei die während des Schaltbetriebs freigesetzte Energie zum Vergleich mit dem Verhalten einer mechanischen Sicherung berücksichtigt wird, und basierend auf dem Vergleich, Schalten des Schalters (103).

6. Elektrische Sicherung (100) nach einem der vorstehenden Ansprüche, worin die elektrische Sicherung (100) auch ausgestaltet ist, um eine gegenwärtige Position des Schalters (103) zu registrieren.

7. Elektrische Sicherung (100) nach einem der vorstehenden Ansprüche, worin die drahtlose Übertragungs- und Empfangs-Einrichtung (111, 112, 113, 116, 117, 118) zum Datentransfer auf Basis von mindestens einem von gprs, wifi, Zigbe, IQRF, SimpleIT, Beestack, Z-wave, KNX, ENOcean, Bluetooth oder dergleichen ausgestaltet ist.

8. Elektrische Sicherung (100) nach einem der vorstehenden Ansprüche, welche weiter Mittel (115) umfasst, um Daten in die Schalteinrichtung (103) einzugeben.

9. Elektrische Sicherung (100) nach einem der vorstehenden Ansprüche, worin der Schaltkreis ausgestaltet ist, um das Moment der Durchführung eines Schaltbetriebs im Hinblick auf eine durch den Stromsensor (102) erfassten elektrischen Strom programmiert zu steuern.

10. Elektrische Sicherung (100) nach einem der vorstehenden Ansprüche, welche weiter Mittel (114) umfasst, um Daten anzuzeigen, die von der elektrischen Sicherung (100) erhalten wurden.

11. Elektrische Sicherung (100) nach einem der vorstehenden Ansprüche, zum Schalten einer elektrischen Stromleitung (L1, L2, L3), die mindestens zwei Stromleitungen umfasst, welche mindestens eines von umfasst : [a] einem Schalter (103), der ausgestaltet ist, um alle Stromleitungen (L1, L2, L3) gleichzeitig zu schalten, oder [b] einem Schalter, der ausgestaltet ist, wahlweise eine oder mehrere elektrische Stromleitungen (L1, L2, L3) zu schalten.

12. Elektrische Sicherung (100) nach einem der vorstehenden Ansprüche die ein Steuermodul (108) umfasst, das mit einem Schaltmodul (103) verbunden ist, und eine drahtlose Übertagungs- und Empfangs-Einrichtung (111, 112, 113), um zwischen der drahtlosen Übertragungs- und Empfangs-Einrichtung und dem Schaltmodul (103) eine Verbindung bereit zu stellen.

13. Elektrische Sicherung (100) nach Anspruch 12, worin das Steuermodul (108) mit der Stromversorgungseinheit (105) verbunden ist, um die elektrische Sicherung (100) mit Strom zu versorgen.

14. Elektrische Sicherung (100) nach einem der Ansprüche 1 - 13, welche ein programmierbares Modul (108) umfasst, um beim Abschalten der elektrischen Sicherung (100) eine Schaltverzögerung zu liefern, wenn ein elektrischer Strom erfasst wird, der in der elektrischen Stromleitung (L1, L2, L3) einen bestimmten Wert überteigt.

15. Verwendung einer elektrischen Sicherung (100) nach einem der vorstehenden Ansprüche, welche den Schritt umfasst, Einbinden einer elektrischen Sicherung (100) in einer Stromleitung (L1, L2, L3), und manuelles Schalten der Sicherung (100), wobei eine programmierte Verzögerung berücksichtigt wird, nachdem die Sicherung (100) aufgrund eines über einem bestimmten Grenzwert liegenden Stromflusses in der Stromleitung (L1, L2, L3) abgeschalten wurde.

## Revendications

1. Fusible électronique (100) pour un conduit d'alimentation électrique basse tension (L1, L2, L3), comprenant :
- un capteur de courant (102) couplé au conduit d'alimentation pour mesurer un courant électrique à travers ledit conduit d'alimentation (L1, L2, L3) durant l'utilisation dudit conduit d'alimentation (L1, L2, L3),
- un commutateur (103) dans ledit conduit d'alimentation (L1, L2, L3) étant connecté à un module de commutation, pour commuter ledit commutateur entre un état interrompu et un état conducteur ;
dans lequel ledit module de commutation est connecté audit capteur de courant (102) et comprend un circuit de commutation pour effectuer une opération de commutation dudit commutateur (103) sur la base dudit courant électrique mesuré par ledit capteur de courant (102) ; et
dans lequel ledit module de commutation est connecté à un dispositif de transmission et de réception sans fil (111, 112, 113) pour transmettre sans fil des données concernant la position dudit commutateur,
dans lequel ledit fusible électronique (100) comprend une mémoire avec une bibliothèque de comportement de commutation d'au moins un fusible, comprenant l'instant de désactivation dudit fusible, et une unité de comparaison pour comparer des données d'utilisation dudit conduit d'alimentation (L1, L2, L3) avec un instant d'extinction de l'au moins un fusible, pour éteindre le fusible électronique (100) par le biais dudit module de commutation quand des données d'utilisation du conduit d'alimentation (L1, L2, L3) correspondent à l'extinction du fusible,
**caractérisé en ce que** ladite mémoire comprend une bibliothèque de comportement de commutation d'au moins un fusible mécanique, comprenant l'instant de désactivation dudit fusible mécanique, dans lequel ladite unité de comparaison compare des données d'utilisation dudit conduit d'alimentation (L1, L2, L3) avec un instant d'extinction de l'au moins un fusible mécanique, et dans lequel l'instant d'extinction du fusible électronique (100) est considéré comme étant un retard de l'instant où un courant excessif est détecté à l'instant où le fusible électronique (100) s'ouvre.

2. Fusible électronique (100) selon la revendication 1, ledit module de commutation comprenant un commutateur pouvant être actionné manuellement (109, 110) pour effectuer une opération de commutation dudit commutateur (103).

3. Fusible électronique (100) selon la revendication 1 ou 2, comprenant une unité d'alimentation pour alimenter électriquement ledit module de commutation (103), dans lequel ladite unité d'alimentation est connectée électriquement audit conduit d'alimentation électrique (L1, L2, L3).

4. Fusible électronique (100) selon la revendication 1, 2 ou 3, ledit fusible électronique (100) comprenant une batterie optionnelle (105) destinée à être chargée par ledit conduit d'alimentation électrique (L1, L2, L3), comprenant en outre un circuit de commande pour activer ladite batterie (105) en cas d'une défaillance dudit conduit d'alimentation électrique (L1, L2, L3).

5. Fusible électronique (100) selon l'une quelconque des revendications précédentes, au moins comprenant au moins un compteur pour enregistrer au moins un parmi :
- le nombre d'opérations de commutation provoquées manuellement dudit commutateur (103), et
- le nombre d'opérations de commutation qui sont provoquées à cause d'un courant mesuré dans la ligne d'alimentation (L1, L2, L3) ;
en tenant compte de l'énergie libérée durant ladite opération de commutation pour une comparaison avec un comportement d'un fusible mécanique et, sur la base de ladite comparaison, en désactivant ledit commutateur (103).

6. Fusible électronique (100) selon l'une quelconque des revendications précédentes, le fusible électronique (100) étant également mis en oeuvre pour enregistrer une position actuelle dudit commutateur (103).

7. Fusible électronique (100) selon l'une quelconque des revendications précédentes, ledit dispositif de transmission et de réception sans fil (111, 112, 113 ; 116, 117, 118) étant mis en oeuvre pour un transfert de données sur la base d'au moins un parmi gprs, wifi, Zigbee, IQRF, SimpleIT, Beestack, Z-wave, KNX, EnOcean, Bluetooth ou similaire.

8. Fusible électronique (100) selon l'une quelconque des revendications précédentes, comprenant en outre un moyen (115) pour entrer des données dans ledit dispositif de commutation (103).

9. Fusible électronique (100) selon l'une quelconque des revendications précédentes, ledit circuit de commutation étant mis en oeuvre pour programmer la commande de l'instant d'exécution d'une opération de commutation par rapport à un courant électrique mesuré par ledit capteur de courant (102).

10. Fusible électronique (100) selon l'une quelconque des revendications précédentes, comprenant en outre un moyen (114) pour représenter par image des données obtenues à partir dudit fusible électronique (100).

11. Fusible électronique (100) selon l'une quelconque des revendications précédentes, pour commuter un conduit d'alimentation électrique (L1, L2, L3) comprenant au moins deux conduits d'alimentation, comprenant au moins un parmi [a] un commutateur (103) mis en oeuvre pour commuter simultanément tous les conduits d'alimentation (L1 ; L2 ; L3) ou [b] un commutateur (103) mis en oeuvre pour commuter de manière optionnelle un ou une pluralité de conduits d'alimentation électrique (L1 ; L2 ; L3).

12. Fusible électronique (100) selon l'une quelconque des revendications précédentes, comprenant un module de commande (108) qui est connecté à un module de commutation (103) et un dispositif de transmission et de réception sans fil (111, 112, 113), pour fournir une communication entre le dispositif de transmission et de réception sans fil et le module de commutation (103).

13. Fusible électronique (100) selon la revendication 12, dans lequel le module de commande (108) est connecté à l'unité d'alimentation (105) pour alimenter le fusible électronique (100).

14. Fusible électronique (100) selon l'une quelconque des revendications 1 à 13, comprenant un module programmable (108) pour fournir un retard de commutation dans l'extinction dudit fusible électronique (100) lors de la mesure d'un courant électrique qui dépasse une valeur prédéterminée dans le conduit d'alimentation électrique (L1, L2, L3).

15. Utilisation d'un fusible électronique (100) selon l'une quelconque des revendications précédentes, comprenant l'étape d'incorporation d'un fusible électronique (100) dans un conduit d'alimentation (L1, L2, L3) et d'activation manuelle dudit fusible (100), en tenant compte d'un retard programmé, après que ledit fusible (100) a été désactivé à cause du dépassement d'un courant prédéterminé dans le conduit d'alimentation (L1, L2, L3).
